# EUROPEAN PATENT SPECIFICATION

(11) **EP 2 085 990 B1**
(45) Date of publication and mention of the grant of the patent: **22.10.2014**
(21) Application number: 09250116.2
(22) Date of filing: 16.01.2009
(51) Int. Cl.: H01H 3/16, H01H 27/00, F16P 3/08

(54) **Safety switches**
Sicherheitsschalter
Interrupteurs de sécurité

(30) Priority: 31.01.2008 GB 0801706
(43) Date of publication of application: 05.08.2009
(73) Proprietor: Rockwell Automation Limited, Milton Keynes Buckinghamshire MK11 3DR (GB)
(72) Inventor: Poyner, Julian, Stockport Cheshire SK7 6JS (GB); Fowler, Samantha, Wigan WN2 4HR (GB); Meadows, Robert, Wigan Lancashire WN3 5QG (GB); Glover, William David, Wigan Lancashire WN5 7NN (GB); Talbot, Geoffery, Wigan Lancashire WN6 0SE (GB); Jones, Derek, Dumfries and Galloway Scotland DG6 4SP (GB)
(74) Representative: Williams, Michael David

(56) References cited:
- EP-A2- 1 741 855
- DE-A1- 10 118 824
- DE-A1- 19 711 588
- DE-C1- 19 840 620
- DE-U1-202005 005 485
- US-A1- 2003 193 417
- US-A1- 2008 006 116

## Description

The present invention relates to safety switches, and in particular to apparatus and methods for providing electricity to a component of a safety switch.

Safety switches are well known, and are typically used to prevent access to, for example, dangerous electromechanical machinery when that machinery is in operation. In a conventional arrangement, the safety switch is mounted on a doorpost of a machinery guard, and an actuator for the safety switch is mounted on a corresponding door of the machinery guard. When the door is closed the actuator engages with the safety switch, which in turn changes the state of electrical contacts within the safety switch. For instance, when the door is closed the actuator may cause electrical contacts within the switch to close therefore allowing electricity to be supplied to machinery within the machine guard. Such an arrangement ensures that electricity can only be supplied to the machinery when the guard door is shut. When the guard door is open, the actuator disengages from the safety switch, thereby opening the electrical contacts and cutting off the supply of electricity to the machinery. This means that when a user opens the guard door to gain entry to the machine guard, the machinery is not supplied with electricity, and the risk of injury to the user is reduced.

In other embodiments, opening and closing of the guard door does not necessarily allow or prevent the supply of electricity to the machinery within the machine guard, but instead may directly or indirectly result in a change in the operating state of the machinery. For instance, when the door to the machinery guard is opened, the contacts within the safety switch can be configured to ensure that the machinery is changed to an idle state, or to run at a slower speed, for example. Alternatively, the safety switch can be configured to control an intermediate control device which is used to control the operating state of the machinery. Movement of electrical contacts may not be required to change the operating state of the switch, and other arrangements may be used. For instance, electronics may be used instead of contacts.

When installing the safety switch, it will be necessary to ensure that the safety switch is in electrical connection with the machinery, or with a control arrangement which is in electrical connection with the machinery. One or more wired communication lines may also be provided to and/or from the safety switch, for example to transfer data to and from the safety switch and/or machinery. The installation of the safety switch therefore includes providing wires or cables to and from the safety switch. It may be necessary to dig up part of the floor on which the machinery is located, cut holes in metal plates or doorposts etc in order to install the necessary wires or cabling. This sort of work can be disruptive, time consuming and expensive. Furthermore, such work may need to be repeated if the safety switch is moved, or if it is replaced with another safety switch.

DE 197 115 88 describes a safety switch for monitoring mobile protection devices. The switch comprises a switching member of at least one reading head, and an actuating element which can be moved in relation to the reading head. Said actuating element engages in contactless interaction with the reading head. The actuating element has an inductive resister for interaction with the reading head.

This safety switch arrangement (9) is suitable for affecting the operating state of equipment to which the safety switch arrangement is at least indirectly connectable and comprises a configuration (41) arranged to change from a first condition to a second condition depending on whether or not an actuator (11) has been engaged with or disengaged from the safety switch arrangement (9), and an electricity generation arrangement (coil 37) for generating electricity and for providing a component (41) of the safety switch arrangement (9) with electricity, wherein a latching arrangement (51, 53) is moveable from a first state to a second state, the first state being when the latching arrangement is configured to latch an actuator (11) of the safety switch arrangement (9) in position relative to the safety switch arrangement, the second state being when the latching arrangement is configured not to latch the actuator (11) in position relative to the safety switch arrangement (9).

It is therefore an object of the present invention to provide a new or alternative safety switch arrangement which may obviate or mitigate at least one disadvantage of the prior art, whether identified herein or elsewhere.

According to a first aspect of the present invention there is provided a safety switch arrangement according to claim 1.

The safety switch may comprise a communications arrangement. The communications arrangement may be the component to which electricity is provided by the electricity generation arrangement. The communications arrangement may be arranged to communicate in a wireless manner. The communications arrangement may be arranged to communicate in a wired manner.

The latching arrangement may comprise a component which is moveable in-between stable states. The states may be stable in that no electricity needs to be supplied to the moveable component in order to keep it in that state. The stable states may correspond to a degree of rotation or a linear displacement of at least a part of the moveable component. The component which is moveable in-between stable states may be a stepper motor or a linear actuator.

The electricity generation arrangement may be arranged to generate electricity automatically. The electricity generation arrangement may comprise a solar panel. The electricity generation arrangement may be configured to generate electricity from vibrations in the environment in which the safety switch arrangement is located.

The electricity generation arrangement may require input from a user of the safety switch in order to generate electricity.

The electricity generation arrangement may comprise a moveable element which is moveable to generate electricity. The moveable element may be configured to be moveable by a user of the safety switch. The moveable element may be configured to be moveable by the actuator when it is engaged with or disengaged from the safety switch.

The electricity generation arrangement may comprise a dynamo.

The electricity generation arrangement may be configured to generate electricity from a fluctuating electric, magnetic or electromagnetic field.

The electricity generation arrangement may comprise a coil of electrically conductive material.

The safety switch arrangement may comprise a storage arrangement for storing electricity generated by the electricity generation arrangement. The storage arrangement may be a battery or a capacitor.

As mentioned above, the safety switch is provided with a configuration arranged to change from a first condition to a second condition depending on whether or not an actuator has been engaged with or disengaged from the safety switch. The first condition may be such that the supply of electricity to the equipment is allowed, and the second condition may be such that the supply of electricity to the equipment is prevented. The first condition may be such that the equipment is arranged to operate at a first speed, and the second condition may be such that the equipment is arranged to operate at a second speed. The first condition may be such that movement of at least a part of the equipment is allowed, and the second condition may be such that movement of the equipment is prevented.

According to a second aspect of the present invention there is provided a safety switch arrangement for affecting the operating state of equipment to which the safety switch arrangement is at least indirectly connected, the safety switch comprising: a configuration arranged to change from a first condition to a second condition depending on whether or not an actuator has been engaged with or disengaged from the safety switch; and an electricity transfer arrangement configured to connect to an external portable power supply and for providing a component of the safety switch with electricity.

The electricity transfer arrangement may comprise a contact or terminal engageable with a contact or terminal of the external portable power supply.

The safety switch may be shaped to accommodate at least a part of the external portable power supply.

The external portable power supply may be a battery or capacitor

The external portable power supply may be provided on or in a card. The card may be provided with readable identification information (e.g. a barcode, RFID tag, magnetic data strip). The safety switch arrangement may comprise a reading arrangement (e.g. a barcode reader, and RFID reader, or a magnetic data strip reader). The electricity transfer arrangement may be arranged to provide the reading arrangement with electricity. A state of the safety switch maybe changed from a first state to a second state if the reading arrangement reads from the card information which corresponds to predetermined information. The predetermined information may be associated with at least one user of the safety switch. The first state may be when the actuator is latched in position relative to the safety switch by a latching arrangement, and the second state is when the actuator is not latched in position relative to the safety switch. The first state may be when the configuration is in the first condition, and the second state may be when the configuration is in the second condition.

The safety switch may comprise a communications arrangement. The communications arrangement may be the component to which electricity is provided by the electricity transfer arrangement. The communications arrangement may be arranged to communicate in a wireless manner. The communications arrangement may be arranged to communicate in a wired manner.

The safety switch may comprise a latching arrangement. The latching arrangement may be the component to which electricity is provided by the electricity transfer arrangement. The latching arrangement may be moveable from a first state to a second state. The first state may be when the latching arrangement latches the actuator in position relative to the safety switch. The second state may be when the latching arrangement does not latch the actuator in position relative to the safety switch. The latching arrangement may comprise a component which is moveable in-between stable states. The states may be stable in that no electricity needs to be supplied to the moveable component in order to keep it in that state. The stable states may correspond to a degree of rotation or a linear displacement of at least a part of the moveable component. The component which is moveable in-between stable states may be a stepper motor or a linear actuator.

The safety switch arrangement may comprise a storage arrangement for storing electricity generated by the electricity generation arrangement. The storage arrangement may be a battery or a capacitor.

As mentioned above, the safety switch is provided with a configuration arranged to change from a first condition to a second condition depending on whether or not an actuator has been engaged with or disengaged from the safety switch. The first condition may be such that the supply of electricity to the equipment is allowed, and the second condition may be such that the supply of electricity to the equipment is prevented. The first condition may be such that the equipment is arranged to operate at a first speed, and the second condition may be such that the equipment is arranged to operate at a second speed. The first condition may be such that movement of at least a part of the equipment is allowed, and the second condition may be such that movement of the equipment is prevented.

Embodiments of the present invention will now be described, by way of example only, with reference to the accompanying Figures, in which:
Figure 1 schematically depicts a known safety switch arrangement in conjunction with a machinery guard, machinery, and power supply;
Figures 2a and 2b schematically depict circuit diagrams which may be used to implement the arrangement shown in Figure 1;
Figure 3 schematically depicts communication principles applicable to the arrangement shown in Figure 1;
Figures 4a and 4b schematically depict latching principles applicable to the arrangement shown in Figure 1;
Figures 5a and 5b schematically depict further features of the latching principles shown in Figures 4a and 4b;
Figure 6 schematically depicts a safety switch arrangement in accordance with an embodiment of the present invention;
Figures 7a and 7b schematically depict electrical power generation arrangements in accordance with the embodiment of the present invention;
Figure 8 schematically depicts communication principles applicable to the arrangement shown in Figures 6 and 7;
Figures 9a and 9b schematically depict latching principles applicable to the arrangement shown in Figures 6 and 7;
Figure 10 schematically depicts a safety switch arrangement in accordance with an embodiment of the present invention in conjunction with a machinery guard and machinery; and
Figures 11a and 11b schematically depict other safety switch arrangements in accordance with other embodiments of the present invention.

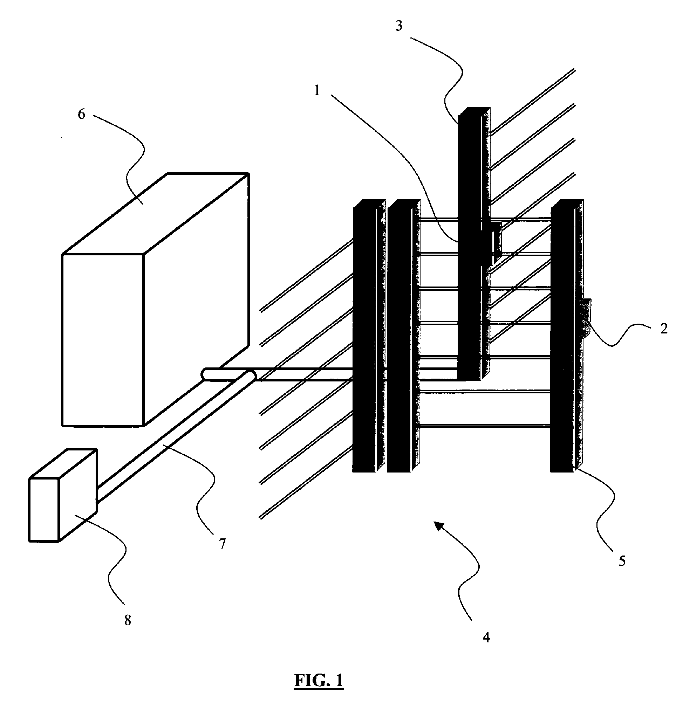

Figure 1 schematically depicts a known safety switch arrangement. The arrangement comprises a safety switch 1 and a safety switch actuator 2. The safety switch 1 is mounted on a fence post 3 of a machinery guard 4. The safety switch actuator 2 is mounted on a door 5 of the machinery guard 4, and is positioned such that it may engage with and disengage from the safety switch 1 with appropriate movement (i.e. opening and closing) of the door 5.

The safety switch 1 is in electrical connection with machinery 6 located within the machinery guard 4. Electrical communication between the safety switch 1 and machinery 6 is achieved via cabling 7. The cabling 7 also connects the machinery 6, and safety switch 1 to a power supply 8. The safety switch 1 is configured to only allow the supply of electricity to the machinery 6 when the door 5 to the machinery guard 4 is closed, thus bringing the safety switch actuator 2 into engagement with the safety switch 1.

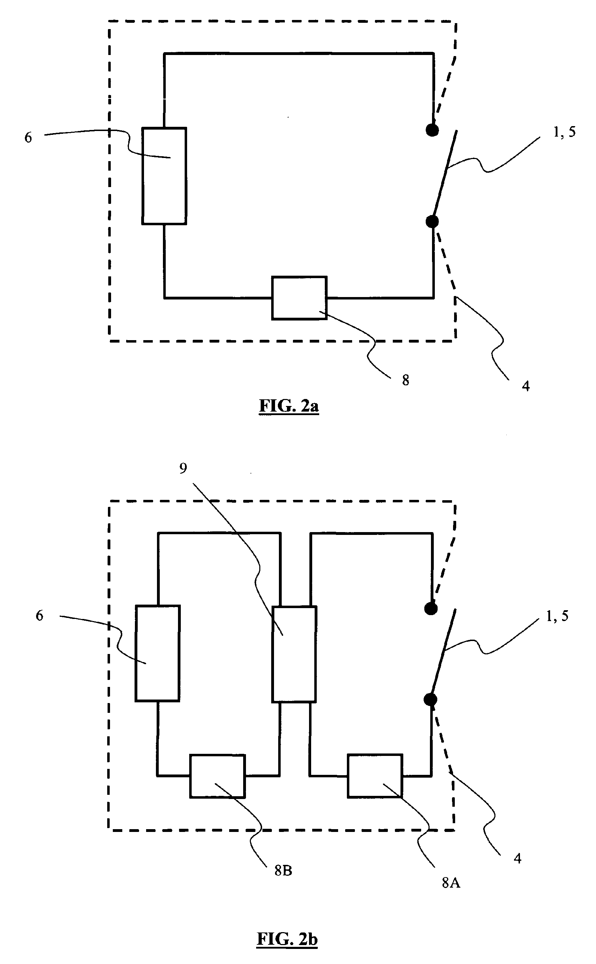

Figure 2a schematically depicts a circuit diagram representative of the electrical relationship between the machinery 6, power supply 8, safety switch 1, and door 5. The circuit is shown schematically in relation to the machinery guard 4. It can be seen that electricity can only be supplied to the machinery 6 when the safety switch 1 is moved to a conducting state, or in other words, when the door 5 to the machinery guard 4 is closed. This may be achieved by the closing of a switch or the bringing together of one or more sets of contacts in the safety switch. If the door 5 to the machinery guard 4 is opened, it can be seen that the electrical circuit is broken such that no electricity will be supplied to the machinery 6. This may be achieved by the opening of a switch or the moving apart of one or more sets of contacts in the safety switch. Since the machinery 6 is not being provided with electricity (and therefore, for example, it is not moving), the risk of injury to a user within the guard is reduced.

Figure 2b depicts an alternative circuit arrangement for controlling the supply of electricity to machinery 6. Rather than directly controlling the supply of electricity to machinery 6 (as is the case of Figure 2a), in Figure 2b the operating state of the machinery 6 is indirectly controlled by the safety switch 1, or in other words the opening or closing of the door 5 to the machinery guard 4. It can be seen that when the safety switch is moved to a conducting state, for example by closing the door 5 to the machinery guard 4, electricity is supplied to a control arrangement 9 by a first power supply 8a. The control arrangement 9 is configured to control the operating state of the machinery 6, which is in connection to a second power supply 8b, when the control arrangement 9 is supplied with electricity by the closing of the door 5 to the machinery guard 4. For instance, it may well that the machinery 6 is neither turned on or off by the opening or closing of the door 5 to the machinery guard 4, but instead moves to one of a number of operating states. For instance, opening of the door 5 to the machinery guard 4 may result in the control arrangement 9 ensuring that the machinery 6 operates at a reduced speed, or ensuring that the machinery 6 is supplied with electricity but is not moving.

It will be appreciated that various different circuit arrangements may be employed in order to effect a change in the operating stage of machinery 6 located within the machinery guard 4 depending on the opening or closing of the door 5 to the machinery guard 4. Figures 2a and 2b are two examples of such arrangements, but are not intended to be limiting in any way.

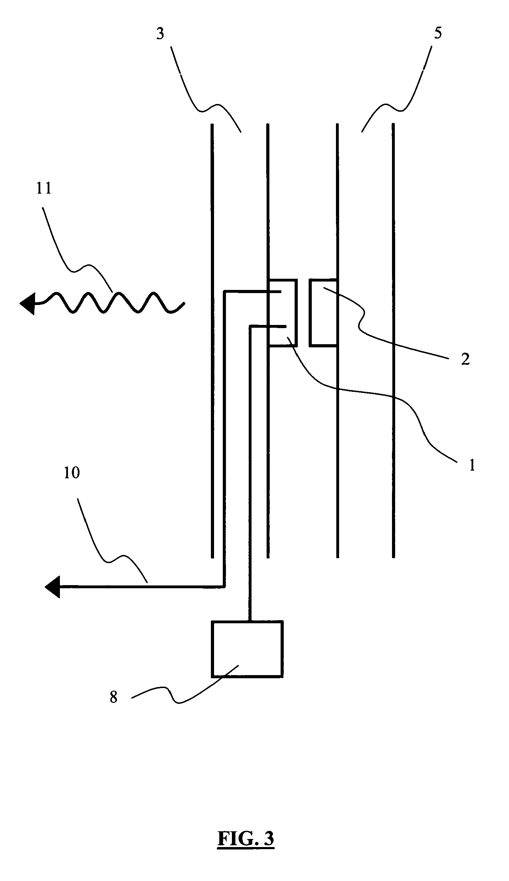

Figure 3 schematically depicts communication principles which may be applicable to the arrangements shown in Figures 1 and 2. It can be seen that the power supply 8 supplies electricity to the safety switch 1. The electricity can be used by the safety switch 1 to, for example, send or receive data in a wired manner 10, or a wireless manner 11. Such data could be instructions which are sent in order to change the operating state of machinery, or instructions that are received in order to change the state of the safety switch. The data does not need to be complex, and can simply be a signal which corresponds to an 'on' or 'off' instruction, or a 'high' or 'low' instruction.

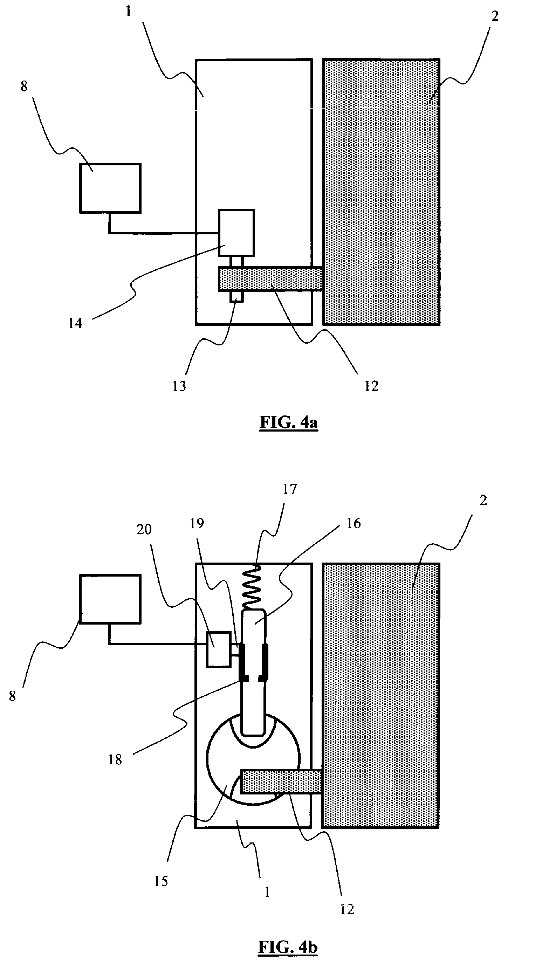

Figures 4a and 4b schematically depict latching principles which may be applicable to the arrangements shown in Figures 1, 2 and 3. Figure 4a shows the safety switch 1 and the safety switch actuator 2. The safety switch actuator 2 is provided with a protruding element 12. When the safety switch actuator 2 is brought to engagement with the safety switch 1, the protruding element 12 extends into the safety switch 1. The protruding element 12 is latched in position in the safety switch 1 by a latching element 13, which is part of a latching arrangement 14. It can be seen that the latching arrangement 14 is powered by the power supply 8. When latched in position, the latching element 13 protrudes through the protruding element 12 of the safety switch actuator 2. When the protruding element 12 of the safety switch actuator 2 is engaged with the latching element 13, the safety switch actuator cannot be disengaged from the safety switch 1. In other words, a door to which the safety switch actuator 2 is attached cannot be opened when the protruding element 12 of the safety switch actuator 2 is engaged with the latching element 13.

Figure 4a illustrates one example of a latching arrangements, but other latching arrangements may be used. Figure 4b shows such another latching arrangement. Referring to Figure 4b, It can be seen that the safety switch actuator 2 is again provided with a protruding element 12. When the safety switch actuator 2 is brought into engagement with the safety switch 1, the protruding element 12 is brought into engagement with a notch of a cam arrangement 15. The cam arrangement 15 rotates upon engagement with the protruding element 12, and the cam arrangement 15 pushes against a plunger 16 which is biased towards the cam arrangement 15 by a spring 17. The plunger 16 therefore moves due to rotation of the cam arrangement 15. When the plunger 16 moves, pivotable latching elements 18 of the safety switch 1 engage with the plunger 16. The engagement of the pivotable latching elements 18 with the plunger 16 prevents further movement of the plunger 16, and also any further rotation of the cam arrangement 15. Since rotation of the cam arrangement 15 is prevented, disengagement of the protruding element 12 of the safety switch actuator 2 from the safety switch is also prevented. This means that when the protruding element 12 has been engaged with the cam arrangement 15, it cannot be disengaged from the cam arrangement 15 until the pivotable latching elements 18 are disengaged from the plunger 16. In other words, a door to which the safety switch actuator 2 is attached cannot be opened when the protruding element 12 of the safety switch actuator 2 is engaged with the cam arrangement 15, and the pivotable latching elements 18 engaged with the plunger 16.

It can be seen that the pivotable latching elements 18 are attached to a retractable connector 19 which is retractable into a housing 20. The housing 20 is supplied with electricity by the power supply 8. The housing 18 and retractable connector 19 could be, for example, a solenoid and plunger arrangement, as is known in the art.

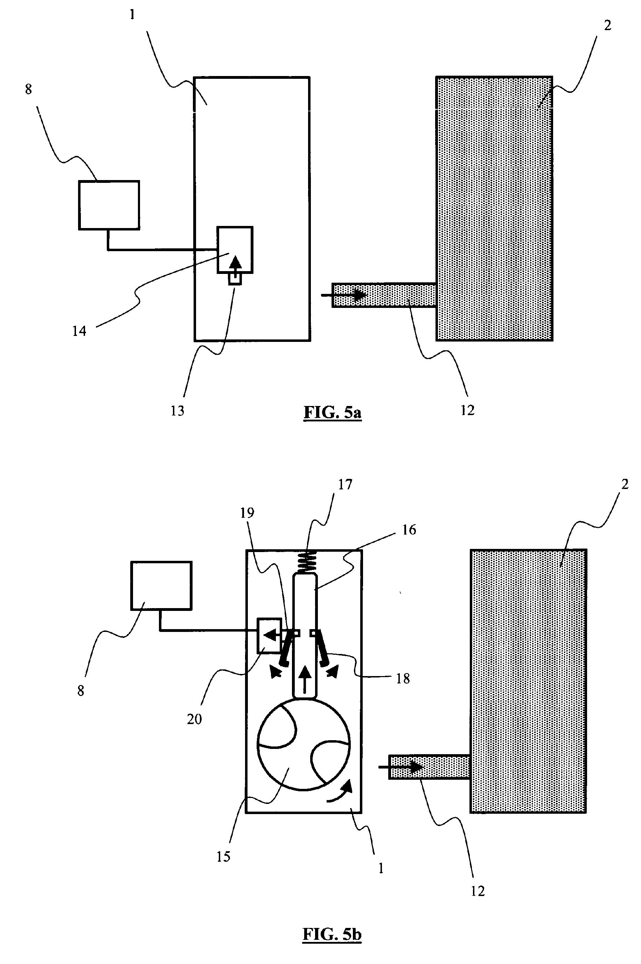

Figures 5a and 5b schematically show how the latching elements of Figures 4a and 4b respectively can be controlled to allow the disengagement of the safety switch actuator 2 from the safety switch 1. In Figure 5a, it can be seen that the latching element 13 shown in Figure 4a can be retracted into the latching arrangement 14, thereby disengaging the latching element 13 from the protruding element 12 of the safety switch actuator 2. The safety switch actuator 2 can then be disengaged from the safety switch 1 and, for example, a door to which the safety switch actuator 2 is attached may be opened. Retraction of the latching element 13 may be achieved by, for example, energising a solenoid in the latching arrangement 14 using electricity supplied by the power supply 8.

Referring to Figure 5b, the pivotable latching elements 18 of Figure 4b can be pivoted out of engagement with the plunger 16 by retracting the retractable connector 19 into the housing 20. This can be achieved by the energising of a solenoid in the housing 20 using electricity supplied by the power supply 8. When the pivotable latching elements 18 have been disengaged from the plunger 16, the plunger 16 is free to move, which means that the cam arrangement 15 is also free to move (i.e. rotate). Since the cam arrangement 15 is now free to move, the protruding element 12 of the safety switch actuator 2 is no longer latched in position, and can be disengaged from the cam arrangement 15 by pulling it and the safety switch actuator 2 away from the safety switch 1. This also means that, for example, a door to which the safety switch actuator 2 is attached may be opened

It will be apparent from a review of Figures 1 to 5, and the descriptions thereof, that the supply of electricity to safety switches may be required for one of a number of reasons, for instance for powering communication or latching arrangements. It can be seen that in the known arrangements, the safety switches are supplied with electrical power using wires or cables or the like. These wires or cables may need to be, for example: laid over long distances; hidden in excavations in or under flooring; and/or passed through and around many obstacles. Furthermore, the wiring, cabling and/or its installation may need to pass many stringent safety requirements. All of these factors may add to the cost and time necessary to install a safety switch, replace a safety switch, or maintain the safety switch. It is therefore desirable to avoid the use of wires and cables or the like for supplying safety switches with electricity.

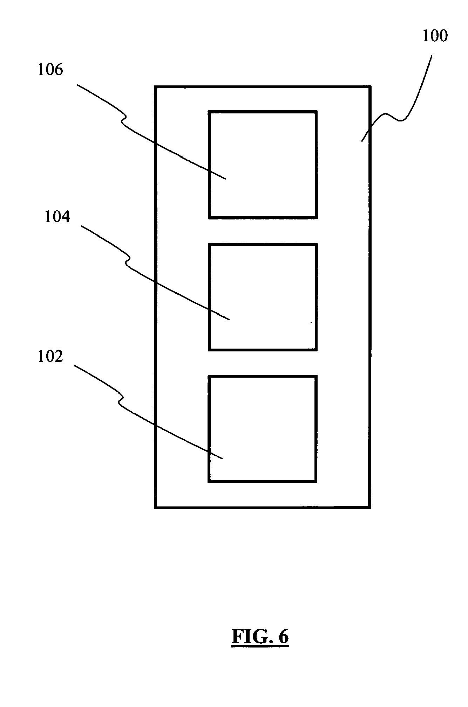

Figure 6 schematically depicts a safety switch arrangement in accordance with an embodiment of the present invention. The Figure shows a safety switch 100. The safety switch is provided with a latching arrangement 102 for, for example, engaging with an actuator (not shown in the Figure) and latching the actuator in position within the safety switch 100. The safety switch 100 is also provided with a communications arrangement 104 for, for example, sending and/or receiving information. The safety switch 100 is further provided with an electrical power generation arrangement 106. The electrical power generation arrangement 106 allows electricity to be generated at the safety switch 100, and for components of the safety switch 100 to be powered by this generated electricity. For instance, the electricity that is generated using the electrical power generation arrangement 106 may be used to supply electricity to the communications arrangement 104 and/or the latching arrangement 102.

It will be appreciated that Figure 6 gives only a very schematic overview of the safety switch arrangement according to an embodiment of the present invention. Embodiments of the safety switch arrangement will now be described in more detail.

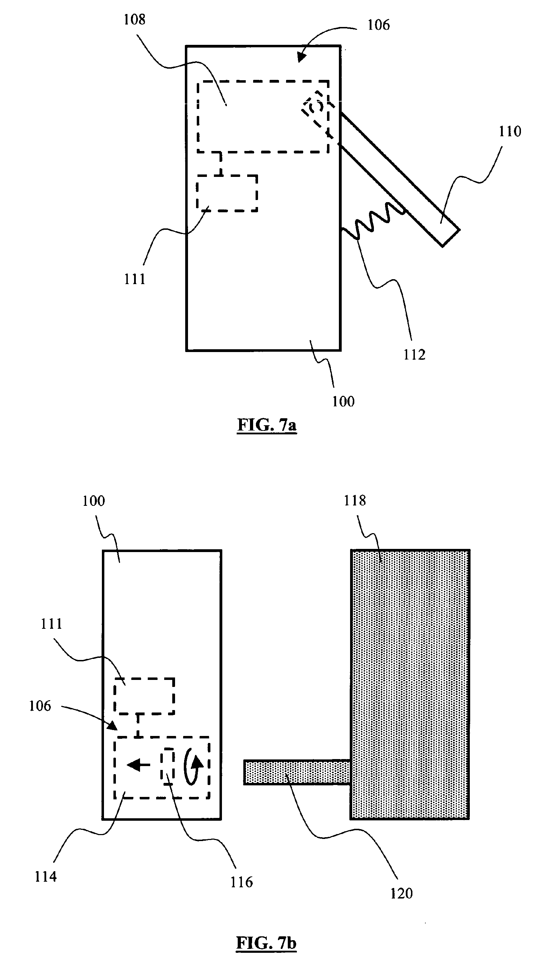

Figure 7a schematically depicts an electrical power generation arrangement 106 in conjunction with a safety switch 100 in accordance with an embodiment of the present invention. The electrical power generation arrangement 106 comprises a dynamo 108 which is located within the safety switch 100. The dynamo 108 can be used to generate electricity by repeated depression of a handle 110 which is in physical connection with the dynamo 108. For instance, depression of the handle 110 towards the safety switch 100 will cause movement of constituent parts of the dynamo 108, from which electricity may be generated in a known manner. A spring 112 is also provided to bias the handle 110 away from the safety switch 100, such that a user only needs to move the handle 110 repeatedly in one direction to move the constituent parts of the dynamo 108 and to therefore generate electricity.

Any suitable dynamo 108 and handle 110 (or the like) arrangement may be used to generate the electricity. For instance, a dynamo 108 and handle 110 arrangement similar or identical to that used in a dynamo powered torch may be used. Since such dynamo arrangements are known in the art, they will not be described in more detail here.

The electricity generated by movement of the handle 110 and corresponding movement of the constituent part of the dynamo 108 may be used to generate electricity which is used as the electricity is being generated. Alternatively, some or all of the generated electricity may be stored in a storage medium 111 located within the safety switch, for example a capacitor or a battery.

Figure 7a depicts only one example of an electrical power generation arrangement. Many other electrical power generation arrangements may be used. Figure 7b illustrates such another arrangement. Referring to Figure 7b, an electrical power generation arrangement 106 is shown as located within a safety switch 100. In this embodiment, the electrical power generation arrangement 106 comprises a housing 114 within which is located a moveable element 116. Figure 7b also shows a safety switch actuator 118. The safety switch actuator 118 is provided with a protruding element 120. When the safety switch actuator 118 is moved towards the safety switch 100, and brought into engagement with the safety switch 100, the protruding element 120 protrudes into the safety switch 100, and more specifically into the housing 114. When the protruding element 120 enters the housing 114 it causes movement of the moveable element 116. The movement of the moveable element 116 may be linear, for example towards and/or away from the protruding element 120, or the movement may be rotational, for example around or about a longitudal axis coinciding with a longitudal axis of the protruding element 120.

The movement of the moveable element 116 may be generated in any one of a number of ways. For instance, the protruding element 120 may push against the moveable element 116 each time the safety switch actuator 118 is brought into engagement with the safety switch 100, thereby pushing the moveable element away from the protruding element 120. Alternatively, the protruding element 120 of the safety switch actuator 118, and/or the moveable element 116 of the electrically powered generation arrangement 106 may be shaped such that when the protruding element 120 moves into the housing 114 it engages with and causes rotation of the moveable element 116. For instance, one or both of the moveable element 116 and protruding element 120 may be provided with a thread or the like, such that linear motion of the protruding element 120 is converted into rotational movement of the moveable element 116.

It will be appreciated that similar movement may be achieved when the actuator 118 is disengaged from the safety switch 100, and the protrusion 120 removed from the housing 114.

Electricity may be generated from the movement of the moveable element in one of a number of ways. For instance, the moveable element 116 may be a magnet, and the housing 114 provided with a solenoid. Electricity may be generated from movement of the moveable element within the solenoid.

Electricity generated using the electrical power generation arrangement 106 may be used as electricity is being generated. Alternatively, the generated electricity may be stored in a storage medium 111 located within the safety switch 100 for use at a later time. The storage medium 111 could be for example a battery or capacitor or the like.

It will be appreciated that Figures 7a and 7b depict electrical power generation arrangements which require some form of input from a user to generate electricity. For instance, in one embodiment a handle needs to be depressed, and in another a door opened and closed to bring a protruding element into and out of engagement with a moveable element. However, the input of a user is not necessary. The electrical power generation arrangement could be arranged to generate electricity automatically, i.e. without the input of a user. For instance, the electrical power generation arrangement could be a solar panel, or an arrangement which generates electricity from vibrations (sometime referred to as power scavenging (from vibrations)), or an arrangement which generates electricity from changes in temperature (for example due to the expansion or contraction of a piezoelectric element). In some circumstances, it may not be important how the electricity is generated at the safety switch, with it only being desirable that electricity can be generated at the safety switch. However, in some other embodiments, it may useful to require some form of input from the user in order for electricity to be generated. For example, in situations where electricity is not stored, the actual generation of the electricity can be used as an indication that a user is at the safety switch, and requires or requests, for example, opening of a door to which the safety switch is attached.

One of the main advantages of being able to generate electricity at the safety switch is that it is no longer necessary to provide cabling and/or wires between the safety switch and a power supply. These advantages are described in more detail below.

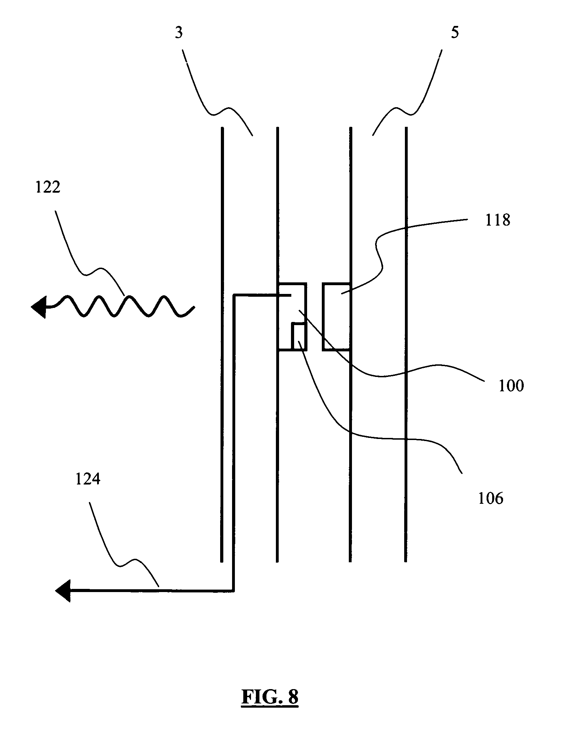

Figure 8 illustrates how information can be sent to and/or from a safety switch using a communication arrangement. The Figure shows that the communications can be undertaken in a wireless 122 or wired 124 manner. In that respect, Figure 8 is generally similar to the known arrangement as shown in Figure 3. However, in contrast to the known arrangement shown in Figure 3, the arrangement shown in Figure 8 does not require an external wired power supply in order for information to be sent to and/or from the safety switch 100. This is because the safety switch 100 is provided with an electrical power generation arrangement 106, as described above. This means that there is no need for a power supply external to the safety switch 100, and that there is consequently no need for cabling or wires to and from the safety switch in order to supply power to the safety switch, and components within the safety switch.

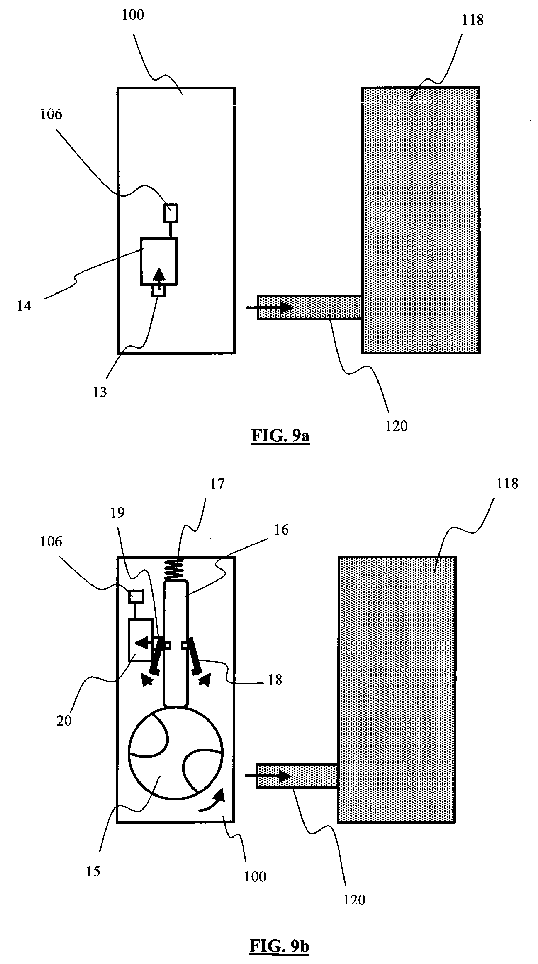

Figures 9a and 9b are, in general, similar to the safety switch arrangement shown in Figures 5a and 5b. In Figures 5a and 5b, each latching arrangement is powered by a power supply which is external to the respective safety switch, and which requires wires or cables to supply power to the safety switch. In contrast, in Figures 9a and 9b, no such external power supply is required. Instead, the safety switch 100 is provided with an electrical power generation arrangement 106 as described in detail above. This means that in order to power the latching arrangement, and thereby provide the latching functionality no wires and/or cables are required to and/or from the safety switch to a power supply external to the safety switch.

Referring back to Figures 6 to 9 in combination, it can be seen that no cables or wires or the like need to be connected to the safety switch in order to supply the safety switch in general, or components within the safety switch, with electricity. This has many advantages. For instance, using a safety switch in accordance with an embodiment of the present invention, the time and cost required to install power supply cabling is no longer required. Furthermore, since no power supply cables, (and indeed, in some embodiments, no cables or wires at all) need to be connected to the safety switch in order for it to be operational (e.g. provided with electricity), the position of the safety switch is no longer restricted by, for example, whether or not power cables can be actually connected to it. This may mean that the safety switch may be located in locations or positions within an environment in which previous safety switches provided with wires or cables could not.

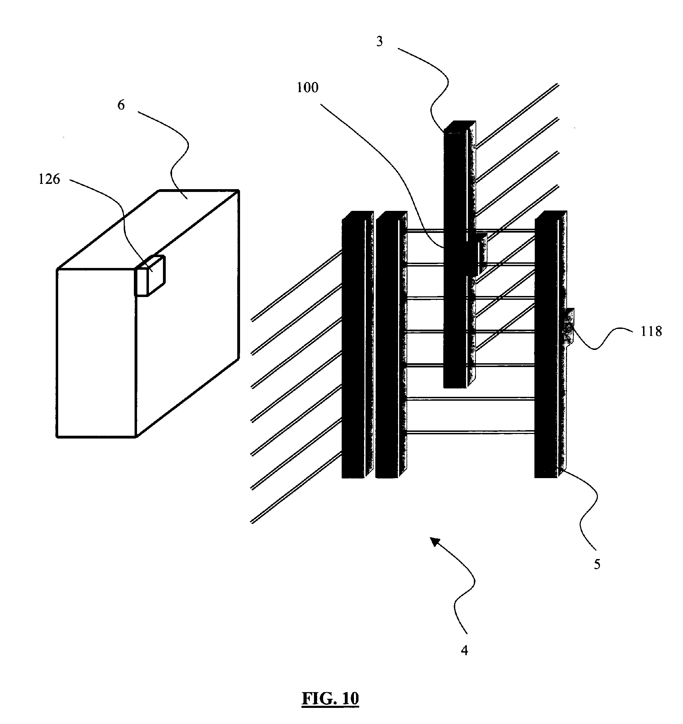

Figure 10 shows how a safety switch arrangement according to an embodiment of the present invention may be used in practice. Figure 10 shows the safety switch arrangement in accordance with an embodiment of the present invention attached to a fence post 3 of a machinery guard 4. A safety switch actuator 118 is attached to a door 5 of the machinery guard 4. The safety switch actuator 118 is located such that it may be brought into and out of engagement with the safety switch 100 by appropriate movement (e.g. opening and closing) of the door 5. Located within the machinery guard 4 is machinery 6. The machinery 6 is provided with a wireless control arrangement 126.

The safety switch 100 is provided with its own electrical power supply in the form of the electrical power generation arrangement (not shown in the Figure but shown and described with reference to previous Figures). Communication between the safety switch 100 and the machinery 6 may be undertaken wirelessly via wireless communication arrangement within the safety switch 100, and the wireless communication arrangement 126 provided on the machinery 6. This means that no power supply cables or wires are required between the machinery 6 and the safety switch 100, and also no wired communication lines are required between the machinery 6 and the safety switch 100.

The arrangement shown in Figure 10 can work in a number of ways. For instance, the electrical power generation arrangement located within the safety switch 100 may generate electricity via the input of a user when the user is at the safety switch 100. The generated electricity may be used at the time of generation to power communications arrangement in the safety switch 100 which communicates with wireless communications arrangement 126 of the machinery 6 and instructs the machinery 6 to change its operating state (for example, to an idle or non-moving state). The electricity which is generated may also be used to unlatch the latching mechanism, allowing the user to enter into the machinery guard 4 as described above. Alternatively, previously generated and stored electricity may be stored by the safety switch 100, and the user can provide an input (e.g. press a button) allowing the electricity to power the communications arrangement and latching mechanisms of the safety switch 100.

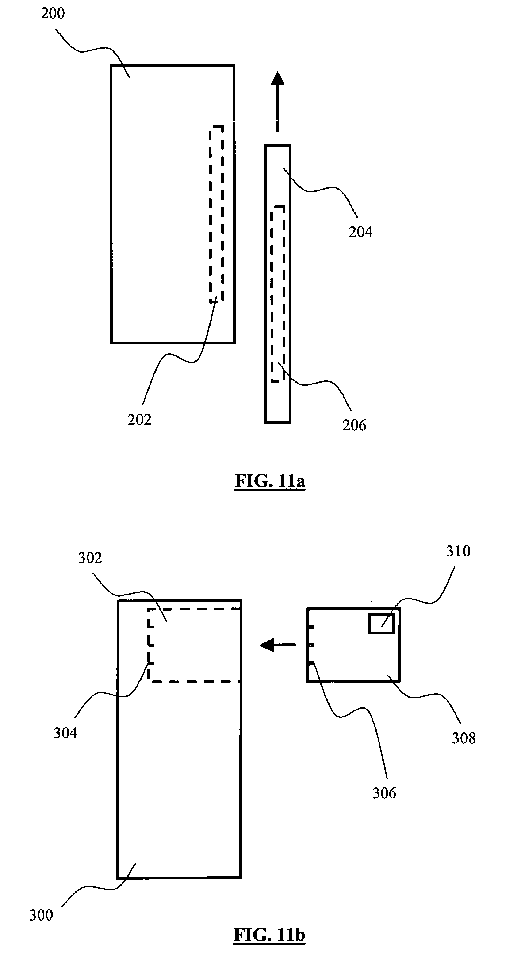

In the embodiments described above, electricity is generated within the safety switch using an electrical power generation arrangement. The main advantage of such arrangement is that no power supply wires or cables are required to and/or from the safety switch. Other arrangements are possible which also have this advantage, but which do not require direct generation of power at the safety switch. Figure 11a shows a safety switch arrangement 200 in accordance with another embodiment of the present invention. The safety switch arrangement 200 is provided with a power scavenging (or in other words receiving) arrangement 202. For instance, the power scavenging arrangement 202 may be a coil or other suitable arrangement. When a user approaches the safety switch 200, they may swipe a card (for example, an ID card 204) across and in close proximity to the safety switch 200. The card 204 is provided with a magnet 206. When the card 204 and magnet 206 with which the card is provided are swept across the power scavenging arrangement 202, power may be generated in the arrangement 202 (e.g. the coil, by inductive principles), and subsequently generated electricity may be used to power latching and/or communications arrangement as described above. The generated electricity may be used at the time of generation, and/or stored for future use.

Figure 11a shows how a moving magnet can generate an electrical current in a coil. Electricity can also be generated in the safety switch by locating a coil provided with an alternating current in the vicinity of a coil located within the switch. Electricity will be transferred to the coil in the switch in the same manner as electricity is transferred between coils of a transformer. Electricity may be generated in the switch by using any appropriate combination of coils, wires, and moving, changing or fluctuating electric, magnetic or electromagnetic fields, as is known in the art.

Figure 11b schematically illustrates a safety switch arrangement 300 in accordance with yet another embodiment of the present invention. The safety switch arrangement 300 is provided with a receptacle 302 such as a slot or the like. Within the receptacle 302 is provided a first connection arrangement 304 (or in other words, an electricity transfer arrangement). The first correction arrangement 304 is arranged to engage with a second connection arrangement 306 provided on a card 308 which may be located in the receptacle 302. The card 308 is provided with a portable power supply 310 in the form of a battery, capacitor or the like. When the card 308 is located within the receptacle 302, such that the second connection means 306 are engaged with the first connection means 304, the portable power supply 310 provided in the card 308 may be used by the safety switch 300 to provide electricity to, for example, a latching or communications arrangement provided in the safety switch (not shown). The safety switch may store some of the electricity provided by the power supply 310 for future use.

The electricity transfer arrangement described in Figure 11b may comprise a connector, terminal, or contacts. In general, an electricity transfer arrangement may be any arrangement which can receive electricity and transfer it to other apparatus. The electricity transfer arrangement could be one or more terminals, connectors or contacts for connecting with an external power supply, or could be a coil or the like for non-contact reception and transfer of electricity.

It can be seen from Figures 11 a and 11 b that, again, no wires or cables are required to and/or from the safety switch in order to power the safety switch in general, or to power specific components within the safety switch. Instead, in Figures 11a and 11b, power is, in general, brought to the safety switch in the form of induction means, or a connectable power supply. It will be appreciated that Figures 11a and 11b schematically depict only two of a number of examples of how power may be brought to the safety switch. In other embodiments, it may not be necessary to bring or use a card to bring power to the safety switch, or move a card in order to generate power within the safety switch. For instance, a dedicated power supply carried by the user may be connected to the safety switch in order to provide it with electricity. However, the use of a card, for example an ID card, may be preferable since the ID card may provide more than just electrical power. For instance, referring to Figure 11b the card 308 may be provided with identification information in the form of a barcode or a magnetic strip or the like. The electricity which the card 308 provides to the safety switch 300 may be used to power a card reading arrangement within the safety switch 300 which is used to read the identification information on the card 308. The safety switch 300 may only allow entry into the machinery guard (by, for example, unlatching a latching arrangement) if the identification information which is read belongs to a user who has sufficient clearance to gain authorised entry into the machinery guard.

In Figure 11b, a portable power supply has been described. Any portable power supply may be used, for instance a battery or capacitor. A cable from a mains supply is not a portable power supply. The portable power supply may be described in context as an external power supply, since it is, in general made, stored, etc. external to the safety switch.

It will be appreciated that a latching mechanism may not be required. In this situation, when the user opens the door to the machinery guard electricity generated at the time of opening the door, or stored from previous electricity generation, can be used to send instructions from the safety switch to a communications arrangement of the machinery to change its operating state. However, in many safety environments, a latching arrangement may be required to ensure that a user cannot simply enter a machine guard. For instance, without a latching arrangement, a user may still be able to enter the machine guard and approach the machinery before the machinery stops moving, or is still powered. The delayed activation of a latching arrangement, on the other hand, can ensure that the machinery is in a safe state before a user is able to enter the machine guard.

It will be appreciated the power generation and/or scavenging arrangements described above do not need to supply all of the electricity which the safety switch requires. For example, the power generation and/or scavenging arrangements may be arranged to provide power for only one of the latching or communications arrangements. If the power generation and/or scavenging arrangements do not provide power to all components of the safety switch, cabling or wiring to and or from an external power supply may be required. However, the arrangement is still advantageous, since it reduces the amount of externally supplied electricity that the safety switch requires as a whole.

In the described embodiments, solenoids have been stated as forming part of the latching arrangement. This is not essential, and may not be preferred. This is because it may be necessary to energise a solenoid for a long period of time in order to ensure that a bolt or plunger (etc.) is retracted within the plunger for a long period of time. To energise a solenoid for a long period of time requires the solenoid to be supplied with electricity for a long period of time. The electricity requirements may be too high for the power generation, scavenging and/or storage arrangements to provide. Instead of using a solenoid, it may therefore be preferable to use a component which is moveable in-between stable states (e.g. state which do not require a power supply to be maintained). For instance, a stepper motor or linear actuator may be preferable, since they can be moved to positions (or states) which do not require the supply of electricity to be maintained.

In the forgoing embodiments, an actuator has been described. The actuator has been described as having a protrusion which can be, for example, moved into and out of a safety switch. It will be appreciated that such an actuator is not essential, and neither is the movement of an actuator into and out of the safety switch. In some embodiments, the actuator could comprise a magnet, and engage and disengage with the safety switch using a magnetic field. In other embodiments, the actuator could be the finger, thumb or another body part of a user.

In the forgoing embodiments, the terms 'latching', 'latched', 'latching arrangement' and 'latched in position' have been used. It will be appreciated that these terms are synonymous with the terms 'rocking, 'locked, 'locking arrangement' and 'locked in position'.

As described above, a safety switch arrangement is provided for affecting the operating state of equipment to which the safety switch is at least indirectly connected. The safety switch is at least indirectly connected to the equipment, in so far as that the safety switch could be connected to the equipment in a wireless manner, or via another piece of equipment which may provide a control or further control functions. The safety switch may of course be directly connected to the equipment, and it will be understood that the term 'at least indirectly connected' includes directly connected.

The safety switch described above can generically be described as being provided with a configuration arranged to change from a first condition to a second condition depending on whether or not an actuator has been engaged with or disengaged from the safety switch. The configuration could be moveable contacts, or solid state electronics, or any suitable configuration. The first condition may be such that the supply of electricity to the equipment is allowed, and the second condition may be such that the supply of electricity to the equipment is prevented. The first condition may be such that the equipment is arranged to operate at a first speed, and the second condition may be such that the equipment is arranged to operate at a second speed. The first condition may be such that movement of at least a part of the equipment is allowed, and the second condition may be such movement of the equipment is prevented. The safety switch as a whole (or the latching arrangement with which it may be provided) may be changeable from a first state to a second state. For instance, in a first state an actuator may be latched in position relative to (e.g. by) the safety switch or latching arrangement. In a second state, the actuator may not be latched in position relative to (e.g. by) the safety switch or latching arrangement. If the actuator is attached to a door, for example of an enclosure in which equipment is located, latching or not latching of the actuator may have the effect of latching the door closed, or allowing it to be opened.

It will be appreciated that the above embodiments have been described by way of example only. It can be further appreciated that various modifications may be made to the described and indeed other embodiments without departing from the invention as defined by the claims that follow.

## Claims

1. A safety switch arrangement for affecting the operating state of equipment to which the safety switch arrangement is at least indirectly connectable, the safety switch arrangement comprising:
a configuration arranged to change from a first condition to a second condition depending on whether or not an actuator (2, 118) has been engaged with or disengaged from the safety switch arrangement;
an electricity generation arrangement (8, 106) for generating electricity and for providing a latching arrangement (14, 102) of the safety switch arrangement with electricity;
wherein the latching arrangement (8, 106) is moveable from a first state to a second state, the first state being when the latching arrangement (14, 102) is configured to latch the actuator (2, 118) of the safety switch arrangement in position relative to the safety switch arrangement, the second state being when the latching arrangement (14, 102) is configured not to latch the actuator (2, 118) in position relative to the safety switch arrangement.

2. The safety switch arrangement as claimed in claim 1, wherein the electricity generation arrangement (8) is arranged to generate electricity automatically.

3. The safety switch arrangement as claimed in claim 1 or 2, wherein the electricity generation arrangement (8) comprises a solar panel,

4. The safety switch arrangement as claimed in any preceding claim, wherein the electricity generation arrangement (8) is configured to generate electricity from vibrations in the environment in which the safety switch arrangement is located.

5. The safety switch arrangement as claimed in claim 1, wherein the electricity generation arrangement (8) requires input from a user of the safety switch arrangement in order to generate electricity.

6. The safety switch arrangement as claimed in any preceding claim wherein the electricity generation arrangement comprises a moveable element (116) which is moveable to generate electricity.

7. The safety switch arrangement as claimed in 6, wherein the moveable element (116) is configured to be moveable by a user of the safety switch arrangement.

8. The safety switch arrangement as claimed in any preceding claim, wherein the moveable element (116) is configured to be moveable by the actuator when it is engaged with or disengaged from the safety switch arrangement.

9. The safety switch arrangement as claimed in any preceding claim wherein the electricity generation arrangement (8, 106) is configured to generate electricity from a fluctuating electric, magnetic or electromagnetic field.

10. The safety switch arrangement as claimed in any preceding claim wherein the electricity generation arrangement (106) comprises a coil of electrically conductive material, and/or a dynamo (108).

11. The safety switch arrangement as claimed any preceding claim, wherein a communications arrangement is arranged to communicate in a wireless manner (11, 122) or in a wired manner (10, 124).

12. The safety switch arrangement as claimed in any preceding claim, wherein the latching arrangement (14, 102) comprises a component which is moveable in-between stable states, the states being stable in that no electricity needs to be supplied to the moveable component in order to keep it in that state.

13. The safety switch arrangement as claimed in any preceding claim, further comprising a storage arrangement (111) for storing electricity provided by the electricity generation arrangement (8, 106).

14. The safety switch arrangement as claimed in any preceding claim, wherein the first condition is such that the supply of electricity to the equipment (6) is allowed, and the second condition is such that the supply of electricity to the equipment (6) is prevented.

15. The safety switch arrangement as claimed in any preceding claim, wherein the first condition is such that the equipment (6) is arranged to operate at a first speed, and the second condition is such that the equipment (6) is arranged to operate at a second speed,
and/or
wherein the first condition is such that movement of at least a part of the equipment(6) is allowed, and the second condition is such movement of the equipment (6) is prevented.

## Patentansprüche

1. Sicherheitsschalteranordnung zum Beeinflussen des Betriebszustandes von Ausrüstung, mit welcher die Sicherheitsschalteranordnung zumindest indirekt verbindbar ist, wobei die Sicherheitsschalteranordnung umfasst:
eine Konfiguration, die dafür eingerichtet ist, von einer ersten Bedingung zu einer zweiten Bedingung zu wechseln, abhängig davon, ob ein Stellglied (2, 118) in die Sicherheitsschalteranordnung eingeklinkt oder daraus ausgeklinkt worden ist oder nicht;
eine Elektrizitätserzeugungsanordnung (8, 106) zum Erzeugen von Elektrizität und zum Versorgen einer Verriegelungsanordnung (14, 102) der Sicherheitsschalteranordnung mit Elektrizität;
worin die Verriegelungsanordnung (8, 106) von einem ersten Zustand zu einem zweiten Zustand beweglich ist, wobei der erste Zustand dann ist, wenn die Verriegelungsanordnung (14, 102) dafür konfiguriert ist, das Stellglied (2, 118) der Sicherheitsschalteranordnung in seiner Position relativ zur Sicherheitsschalteranordnung zu verriegeln, wobei der zweite Zustand dann ist, wenn die Verriegelungsanordnung (14, 102) dafür konfiguriert ist, das Stellglied (2, 118) nicht in seiner Position relativ zur Sicherheitsschalteranordnung zu verriegeln.

2. Sicherheitsschalteranordnung nach Anspruch 1, worin die Elektrizitätserzeugungsanordnung (8) dafür konfiguriert ist, automatisch Elektrizität zu erzeugen.

3. Sicherheitsschalteranordnung nach Anspruch 1 oder 2, worin die Elektrizitätserzeugungsanordnung (8) ein Solarmodul umfasst.

4. Sicherheitsschalteranordnung nach einem der vorhergehenden Ansprüche, worin die Elektrizitätserzeugungsanordnung (8) dafür konfiguriert ist, Elektrizität aus Vibrationen in der Umgebung zu erzeugen, in der sich die Sicherheitsschalteranordnung befindet.

5. Sicherheitsschalteranordnung nach Anspruch 1, worin die Elektrizitätserzeugungsanordnung (8) Eingaben von einem Benutzer der Sicherheitsschalteranordnung erfordert, um Elektrizität zu erzeugen.

6. Sicherheitsschalteranordnung nach einem der vorhergehenden Ansprüche, worin die Elektrizitätserzeugungsanordnung ein bewegliches Element (116) umfasst, das beweglich ist, um Elektrizität zu erzeugen.

7. Sicherheitsschalteranordnung nach Anspruch 6, worin das bewegliche Element (116) dafür konfiguriert ist, durch einen Benutzer der Sicherheitsschalteranordnung beweglich zu sein.

8. Sicherheitsschalteranordnung nach einem der vorhergehenden Ansprüche, worin das bewegliche Element (116) dafür konfiguriert ist, durch das Stellglied beweglich zu sein, wenn es in die Sicherheitsschalteranordnung eingeklinkt oder daraus ausgeklinkt wird.

9. Sicherheitsschalteranordnung nach einem der vorhergehenden Ansprüche, worin die Elektrizitätserzeugungsanordnung (8, 106) dafür konfiguriert ist, Elektrizität aus einem schwankenden elektrischen, magnetischen oder elektromagnetischen Feld zu erzeugen.

10. Sicherheitsschalteranordnung nach einem der vorhergehenden Ansprüche, worin die Elektrizitätserzeugungsanordnung (106) eine Spule aus elektrisch leitfähigem Material und/oder einen Dynamo (108) umfasst.

11. Sicherheitsschalteranordnung nach einem der vorhergehenden Ansprüche, worin eine Kommunikationsanordnung dafür eingerichtet ist, auf drahtlose Weise (11, 122) oder auf drahtgebundene Weise (10, 124) zu kommunizieren.

12. Sicherheitsschalteranordnung nach einem der vorhergehenden Ansprüche, worin die Verriegelungsanordnung (14, 102) eine Komponente umfasst, die zwischen stabilen Zuständen beweglich ist, wobei die Zustände insofern stabil sind, als der beweglichen Komponente keine Elektrizität zugeführt werden muss, um sie in diesem Zustand zu halten.

13. Sicherheitsschalteranordnung nach einem der vorhergehenden Ansprüche, ferner eine Speicheranordnung (111) zum Speichern von durch die Elektrizitätserzeugungsanordnung (8, 106) bereitgestellter Elektrizität umfassend.

14. Sicherheitsschalteranordnung nach einem der vorhergehenden Ansprüche, worin die erste Bedingung so ist, dass die Zufuhr von Elektrizität zur Ausrüstung (6) gestattet wird, und die zweite Bedingung so ist, dass die Zufuhr von Elektrizität zur Ausrüstung (6) verhindert wird.

15. Sicherheitsschalteranordnung nach einem der vorhergehenden Ansprüche, worin die erste Bedingung so ist, dass die Ausrüstung (6) eingerichtet ist, mit einer ersten Geschwindigkeit zu arbeiten, und die zweite Bedingung so ist, dass die Ausrüstung (6) eingerichtet ist, mit einer zweiten Geschwindigkeit zu arbeiten,
und/oder
worin die erste Bedingung so ist, dass Bewegung zumindest eines Teils der Ausrüstung (6) gestattet wird, und die zweite Bedingung so ist, dass Bewegung der Ausrüstung (6) verhindert wird.

## Revendications

1. Agencement formant interrupteur de sécurité permettant d'influer sur l'état de fonctionnement d'un équipement auquel l'agencement formant interrupteur de sécurité peut être connecté au moins indirectement, l'agencement formant interrupteur de sécurité comprenant :
une configuration conçue pour passer d'une première modalité à une seconde modalité selon qu'un actionneur (2, 118) a été mis en prise ou hors de prise avec l'agencement formant interrupteur de sécurité ou non ;
un agencement de génération d'électricité (8, 106) permettant de générer de l'électricité et de fournir de l'électricité à un agencement de verrouillage (14, 102) de l'agencement formant interrupteur de sécurité;
dans lequel l'agencement de verrouillage (8, 106) peut être déplacé d'un premier état vers un second état, le premier état étant lorsque l'agencement de verrouillage (14, 102) est configuré pour verrouiller l'actionneur (2, 118) de l'agencement formant interrupteur de sécurité en position par rapport à l'agencement formant interrupteur de sécurité, le second état étant lorsque l'agencement de verrouillage (14, 102) est configuré pour ne pas verrouiller l'actionneur (2, 118) en position par rapport à l'agencement formant interrupteur de sécurité.

2. Agencement formant interrupteur de sécurité selon la revendication 1, dans lequel l'agencement de génération d'électricité (8) est conçu pour générer de l'électricité de manière automatique.

3. Agencement formant interrupteur de sécurité selon la revendication 1 ou 2, dans lequel l'agencement de génération d'électricité (8) comprend un panneau solaire.

4. Agencement formant interrupteur de sécurité selon l'une quelconque des revendications précédentes, dans lequel l'agencement de génération d'électricité (8) est configuré pour générer de l'électricité à partir de vibrations de l'environnement dans lequel l'agencement formant interrupteur de sécurité est situé.

5. Agencement formant interrupteur de sécurité selon la revendication 1, dans lequel l'agencement de génération d'électricité (8) requiert une entrée de la part d'un utilisateur de l'agencement formant interrupteur de sécurité afin de générer de l'électricité.

6. Agencement formant interrupteur de sécurité selon l'une quelconque des revendications précédentes, dans lequel l'agencement de génération d'électricité comprend un élément mobile (116) qui peut être déplacé afin de générer de l'électricité.

7. Agencement formant interrupteur de sécurité selon la revendication 6, dans lequel l'élément mobile (116) est configuré pour pouvoir être déplacé par un utilisateur de l'agencement formant interrupteur de sécurité.

8. Agencement formant interrupteur de sécurité selon l'une quelconque des revendications précédentes, dans lequel l'élément mobile (116) est configuré pour pouvoir être déplacé par l'actionneur lorsqu'il est mis en prise ou hors de prise avec l'agencement formant interrupteur de sécurité.

9. Agencement formant interrupteur de sécurité selon l'une quelconque des revendications précédentes, dans lequel l'agencement de génération d'électricité (8, 106), est configuré pour générer de l'électricité à partir d'un champ électrique, magnétique ou électromagnétique fluctuant.

10. Agencement formant interrupteur de sécurité selon l'une quelconque des revendications précédentes, dans lequel l'agencement de génération d'électricité (106) comprend une bobine en un matériau électriquement conducteur, et/ou une dynamo (108).

11. Agencement formant interrupteur de sécurité selon l'une quelconque des revendications précédentes, dans lequel un agencement de communication est agencé afin de communiquer sans fil (11, 122) ou de manière filaire (10, 124).

12. Agencement formant interrupteur de sécurité selon l'une quelconque des revendications précédentes, dans lequel l'agencement de verrouillage (14, 102) comprend un composant qui peut être déplacé entre des états stables, les états étant stables dans la mesure où il n'est pas nécessaire d'alimenter en électricité le composant mobile pour le maintenir dans ledit état.

13. Agencement formant interrupteur de sécurité selon l'une quelconque des revendications précédentes, comprenant en outre un agencement de stockage (111) permettant de stocker de l'électricité fournie par l'agencement de génération d'électricité (8, 106).

14. Agencement formant interrupteur de sécurité selon l'une quelconque des revendications précédentes, dans lequel la première modalité est telle que l'alimentation de l'équipement (6) en électricité est autorisée, et la seconde modalité est telle que l'alimentation de l'équipement (6) en électricité est empêchée.

15. Agencement formant interrupteur de sécurité selon l'une quelconque des revendications précédentes, dans lequel la première modalité est telle que l'équipement (6) est conçu pour fonctionner à une première vitesse, et la seconde modalité est telle que l'équipement (6) est conçu pour fonctionner à une seconde vitesse,
et/ou
dans lequel la première modalité est telle qu'un mouvement d'au moins une partie de l'équipement (6) est autorisé, et la seconde modalité est telle qu'un mouvement de l'équipement (6) est empêché.
